# EUROPEAN PATENT SPECIFICATION

(11) **EP 1 764 890 B1**
(45) Date of publication and mention of the grant of the patent: **08.12.2010**
(21) Application number: 05397017.4
(22) Date of filing: 16.09.2005
(51) Int. Cl.: H02G 7/05

(54) **Suspension clamp for a low-voltage cable**
Halteklammer für ein Niederspannungskabel
Pince de suspension pour un câble basse tension

(43) Date of publication of application: 21.03.2007
(73) Proprietor: Ensto Finland Oy, 06150 Porvoo (FI)
(72) Inventor: Julkunen, Seppo, 07880 Liljendahl (FI); Depka, Piotr, 80-041 Gdansk (PL)
(74) Representative: LEITZINGER OY

(56) References cited:
- EP-A- 0 020 943
- EP-A- 0 889 568
- US-A- 5 936 197

## Description

The invention relates to a suspension clamp for a low-voltage cable, comprising a body provided with a suspension loop or the like suspension member and a hook-like or C-shaped base member adapted to receive a suspended cable through its open side, a clamping arm adaptable to close said open side and having a first end and a second end, and a manually operated clamping mechanism for making the clamping arm approach the base member.

The suspension clamp is particularly intended for a 4-core cable, which refers to a twisted bundle of four conductors, wherein three phase lines and the zero line are all current-bearing conductors.

This type of suspension clamp is prior known from the Applicant's patent publication EP-0696389 B1. The clamping arm disclosed therein is functionally and structurally such that its tightening requires a tool and its adaptation to various cable diameters is tedious.

Patent publication EP-0889568 B1 discloses a similar suspension clamp, in which the clamping arm can be pivoted manually by means of a wing screw. However, there is no quick preadjustment feature for setting the clamping arm in various preadjusted positions (cable diameters can be within the range of 12-42 mm). In addition, the clamping arm is designed as a bifurcated lever, which is difficult to make durable and is structurally awkward.

It is an object of the invention to provide a suspension clamp capable of avoiding the foregoing problems of the prior art. In particular, the clamping arm must be provided with a quickly and readily installable preadjustment feature and its leverage must be advantageous, such that the clamping can be performed manually, e.g. with a wing screw. The structure must also be simple and durable.

This object and other goals of the invention are accomplished by a suspension clamp as defined in the appended claim 1. The dependent claims present features in a preferred embodiment of the invention.

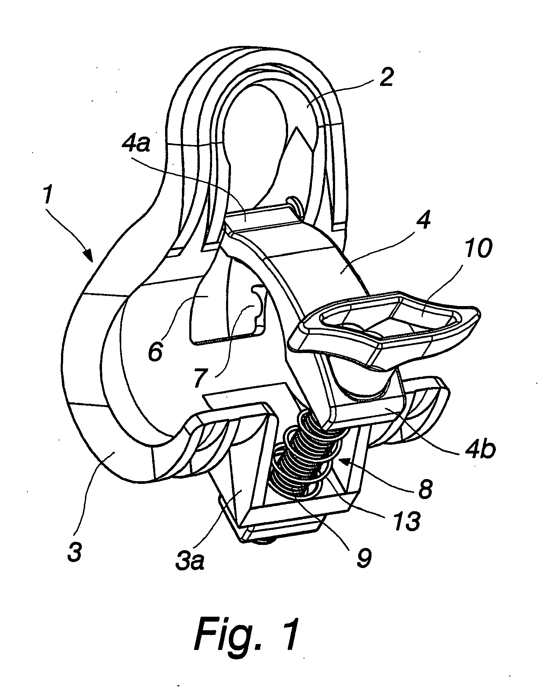

A preferred embodiment of the invention will now be described in more detail with reference to the accompanying drawings, in which
Fig. 1 shows a suspension clamp of the invention in a perspective view and

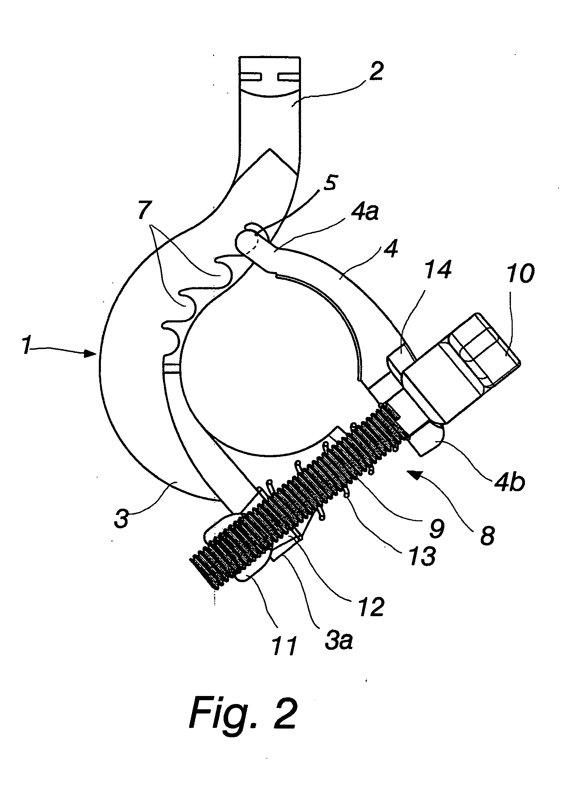

Fig. 2 shows the same suspension clamp in a cross-section.

The upper part of a body 1 includes a suspension loop 2, and its lower part comprises a hook-like or C-shaped base member 3 which is adapted to receive a suspended cable through its open side. The suspension loop 2 or the like is intended to be suspended on a hook, a peg or some other suspension bracket.

A clamping arm 4 is adaptable to close the open side of the base member 3. The clamping arm is additionally provided with a clamping mechanism 8 for rotating the clamping arm 4 towards the base member 3 in order to secure a cable between the base member 3 and the clamping arm 4.

Between the suspension loop 2 and the base member 3, the body 1 includes a slot or recess 6 for accommodating a first end 4a of the clamping arm 4. The arm is provided on either side of its end 4a with oppositely protruding axle pins 5. The slot or recess 6 is provided on either side with several or a few successive adjustment grooves 7, opening away from the clamping arm 4 and being dimensioned to receive the clamping arm's axle pins 5 in optional grooves 7. Thus, the clamping arm's end 4a is located within the slot or recess 6 and can be set at an optional preadjustment position defined by the thickness of a cable to be suspended.

The clamping mechanism 8 is mounted on a second end 4b of the clamping arm 4 and provided with a spring 13 for loading the clamping arm 4 in such a way that said axle pins 5 are biased towards retreating into said adjustment grooves 7.

Between the adjustment grooves (7) are ratchets for blocking displacement of the axle pins 5 in the clamping arm's 4 opening direction, yet for allowing dislodgement thereof out of the adjustment grooves 7 when the clamping arm 4 moves slightly against the load created by said spring 13.

In the presently discussed embodiment, this procedure is such that the spring 13 is a compression spring fitted around a clamping screw 9 between a bearing race 3a and the clamping arm's second end 4b. Consequently, the spring 13 has its spring action urging to retain the clamping screw 9 in a given orientation relative to the body 1. This orientation is selected to be such that the clamping arm are has its axle pins 5 engaged in the adjustment grooves 7, yet readily disengageable therefrom for preadjustment of the clamping arm 4 simply by tilting the screw 9 against the spring's 13 action.

The clamping screw 9 has its top end provided with a tightening wing 10 for manual clamping. The screw 9 is engaged with a half-round nut 11 rotatable with respect to the base member's 3 bearing race 3a. The screw mandrel between the screw's (9) leading end and tightening wing (10) extends through a loose hole (14) present at the clamping arm's (4) second end (4b). Designated by reference numeral 3a is an extension of the base member 3, which constitutes a support for the bottom end of the spring 13 and functions as a bearing race for the nut 11. The bearing race 3a is provided with a loose hole 12, allowing for a tilting action of the screw 9, which is necessary for the clamping arm's 4 preadjustment as the axle pins 5 are set in appropriate adjustment grooves 7.

The installation process for a suspension clamp of the invention is such that the fitter first opens the clamping arm 4, lays a cable within the body 1 on top of the base member 3, then closes the clamping arm 4 and presses its preadjustment end 4a against the cable, whereby the spring 13 present around the screw 9 automatically pulls the clamping arm's axle pins 5 into the adjustment grooves 7. Finally, the screw 9 is clamped by means of the tightening wing 10.

The above exemplary embodiment may be subject to a host of modifications regarding its structural details. For example, the notch 6 can be a recess, having its bottom provided with one or more rows of adjustment grooves 7 opening in the direction of the clamping arm 4. In this case, the laterally protruding pins 5 can be replaced with a single spindle, which may be constituted by the arm's 4 rounded end 4a.

## Claims

1. A suspension clamp for a low-voltage cable, comprising a body (1) provided with a suspension loop (2) or the like suspension member and a hook-like or C-shaped base member (3) adapted to receive a suspended cable through its open side, a clamping arm (4) adaptable to close said open side and having a first end (4a) and a second end (4b), and a manually operated clamping mechanism (8) for making the clamping arm (4) approach the base member (3), **characterized in that** the closing clamp has its first end (4a) equipped with an axle pin or pins (5), that the body (1) has between the suspension loop (2) and the base member (3) a slot or recess (6) for accommodating the clamping arm's first end (4a), that the slot or recess (6) includes several or few successive adjustment grooves (7) which are dimensioned to receive the closing clamp's axle pin or pins (5) in optional grooves (7), and that the clamping mechanism (8) is mounted on the clamping arm's second end (4b) and provided with a spring (13) for loading the clamping arm (4), the load biasing said axle pin or pins (5) to retreat into said adjustment grooves (7).

2. A suspension clamp as set forth in claim 1, **characterized in that** between the adjustment grooves (7) are ratchets for blocking displacement of the axle pin or pins (5) in the clamping arm's (4) opening direction, yet for allowing dislodgement thereof out of the adjustment grooves (7) when the clamping arm (4) moves against the load created by said spring (13).

3. A suspension clamp as set forth in claim 1 or 2, **characterized in that** the clamping mechanism (8) includes a screw (9), provided with a tightening wing (10) and engaged with a half-round nut (11) rotatable with respect to a bearing race (3a) of the base member, and that the screw mandrel between the screw's (9) leading end and tightening wing (10) extends through a hole (14) present at the clamping arm's (4) second end (4b).

4. A suspension clamp as set forth in claim 3, **characterized in that** said spring (13) is a compression spring placed around the screw (9) between the bearing race (3a) and the clamping arm's second end (4b), and that the spring (13) has its spring action urging to retain the screw (9) in a given orientation relative to the body (1), said orientation being such that the clamping arm has its axle pin or pins (5) engaged in the adjustment grooves (7).

## Patentansprüche

1. Halteklammer für ein Niederspannungskabel, umfassend einen Körper (1), der mit einer Halteschleife (2) oder ähnlichem Halteglied und einem hakenartigen oder C-förmigen Basisglied (3), das dazu geeignet ist, ein gehaltenes Kabel durch seine offene Seite aufzunehmen, einem Klemmarm (4), der zum Schließen der offenen Seite geeignet ist und ein erstes Ende (4a) und ein zweites Ende (4b) aufweist, und einem von Hand betriebenen Klemmmechanismus (8) zum Bewirken, dass sich der Klemmarm (4) dem Basisglied (3) annähert, versehen ist, **dadurch gekennzeichnet, dass** die Schließklammer an ihrem ersten Ende (4a) mit einem Achszapfen oder mit Achszapfen (5) ausgestattet ist, dass der Körper (1) zwischen der Halteschleife (2) und dem Basisglied (3) einen Schlitz oder eine Aussparung (6) zum Unterbringen des ersten Endes (4a) des Klemmarms aufweist, dass der Schlitz oder die Aussparung (6) mehrere oder wenige aufeinanderfolgende Anpassungsnute (7) enthält, die zum Aufnehmen des Achszapfens oder der Achszapfen der Schließklammer in optionalen Nuten (7) bemessen sind, und dass der Klemmmechanismus (8) am zweiten Arm (4b) des Klemmarms angebracht und mit einer Feder (13) zum Belasten des Klemmarms (4) versehen ist, wobei die Belastung den Achszapfen oder die Achszapfen (5) zum Zurückziehen in die Anpassungsnute (7) vorspannt.

2. Halteklammer nach Anspruch 1, **dadurch gekennzeichnet, dass** sich zwischen den Anpassungsnuten (7) Sperrklinken zum Blockieren der Verschiebung des Achszapfens oder der Achszapfen (5) in der Öffnungsrichtung des Klemmarms (4), jedoch zum Ermöglichen der Verschiebung davon aus den Anpassungsnuten (7), wenn sich der Klemmarm (4) gegen die Belastung bewegt, die durch die Feder (13) bewirkt ist, befinden.

3. Halteklammer nach einem der Ansprüche 1 oder 2, **dadurch gekennzeichnet, dass** der Klemmmechanismus (8) eine Schraube (9) enthält, die mit einem Spannflügel (10) versehen ist und mit einer halbrunden Mutter (11) drehbar bezüglich einer Lagerlaufbahn (3a) des Basisglieds in Eingriff steht, und dass die Schraubenspindel zwischen dem Vorderende und Spannflügel (10) der Schraube (9) durch ein Loch (14) verläuft, das am zweiten Ende (4b) des Klemmarms (4) vorhanden ist.

4. Halteklammer nach Anspruch 3, **dadurch gekennzeichnet, dass** die Feder (13) eine Druckfeder ist, die zwischen der Lagerlaufbahn (3a) und dem zweiten Ende (4b) des Klemmarms um die Schraube (9) herum angeordnet ist, und dass die Feder (13) ihre Federwirkung zum Zurückhalten der Schraube (9) in einer vorgegebenen Ausrichtung bezüglich des Körpers (1) drängen lässt, wobei die Ausrichtung derart ist, dass der Klemmarm seinen Achszapfen oder seine Achszapfen (5) in Eingriff in den Anpassungsnuten (7) aufweist.

## Revendications

1. Pince de suspension pour un câble basse tension, comprenant un corps (1) pourvu d'une boucle de suspension (2) ou d'un élément de suspension similaire et un élément de base de type crochet ou en forme de C (3) adaptée afin de recevoir un câble suspendu à travers son côté ouvert, un bras de serrage (4) adaptable afin de fermer ledit côté ouvert et ayant une première extrémité (4a) et une seconde extrémité (4b), et un mécanisme de serrage actionné manuellement (8) pour rapprocher l'élément de base (3), **caractérisé en ce que** la pince de serrage a sa première extrémité (4a) équipée d'une cheville et de chevilles avec axe (5), que le corps (1) possède entre la boucle de suspension (2) et l'élément de base (3) une fente ou un évidement (6) pour renfermer la première extrémité (4a), **en ce que** la fente ou l'évidement (6) inclut plusieurs ou quelques rainures d'ajustement successives (7) qui sont dimensionnées afin de recevoir la cheville ou les chevilles avec axe (5) de la pince fermante dans des rainures optionnelles (7), et **en ce que** le mécanisme de serrage (8) est monté sur la seconde extrémité de bras de serrage (4b) et pourvue d'un ressort (13) pour charger le bras de serrage (4), la charge polarisant ladite cheville ou chevilles avec axe (5) afin qu'elle se rétracte à l'intérieur desdites rainures d'ajustement (7).

2. Pince de suspension selon la revendication 1, **caractérisé en ce que** entre les rainures d'ajustement (7) se trouvent des cliquets de retenue pour bloquer le déplacement de la cheville ou des chevilles avec axe (5) dans la direction d'ouverture du bras de serrage (4), néanmoins en permettant un déplacement de celles-ci à l'extérieur des rainures d'ajustement (7) quand le bras de serrage (4) se déplace en sens contraire à la charge créée par ledit ressort (13).

3. Pince de suspension selon la revendication 1 ou 2, **caractérisée en ce que** le mécanisme de serrage (8) inclut une vis (9), pourvue d'un écrou à oreilles (10) et venant en prise avec un écrou semi-circulaire (11) rotatif par rapport à un chemin de roulement (3a) de l'élément de base, et **en ce que** le mandrin à vis entre l'extrémité menante de la vis (9) et l'écrou à oreilles (10) s'étend à travers un trou (14) présent au niveau de la seconde extrémité (4b) du bras de serrage (4).

4. Pince de suspension selon la revendication 3, **caractérisé en ce que** ledit ressort (13) est un ressort de compression placé autour de la vis (9) entre le chemin de roulement (3a) et la seconde extrémité du bras de serrage (4b), et **en ce que** le ressort (13) a son action de ressort qui presse afin de retenir la vis (9) dans une orientation donnée par rapport au corps (1), ladite orientation étant telle que le bras de serrage a sa chevilles ou ses chevilles avec axe (5) venant en prise avec les rainures d'ajustement (7).
